# FASCICULE DE BREVET EUROPEEN

(11) **EP 1 425 108 B1**
(45) Date de publication et mention de la délivrance du brevet: **02.05.2007**
(21) Numéro de dépôt: 02774884.7
(22) Date de dépôt: 27.08.2002
(51) Int. Cl.: B05D 1/00

(54) **PROCEDE DE GREFFAGE ET DE CROISSANCE D'UN FILM ORGANIQUE CONDUCTEUR SUR UNE SURFACE**
VERFAHREN ZUR PFROPFUNG UND ZUM WACHSTUM VON EINEM ORGANISCHEN ELEKTRISCH LEITFÄHIGEN FILM AUF EINER OBERFLÄCHE
METHOD FOR GRAFTING AND GROWING A CONDUCTIVE ORGANIC FILM ON A SURFACE

(30) Priorité: 28.08.2001 FR 0111164
(43) Date de publication de la demande: 09.06.2004
(73) Titulaire: COMMISSARIAT A L'ENERGIE ATOMIQUE, 75015 Paris (FR)
(72) Inventeur: BUREAU, Christophe, F-95150 Suresnes (FR); LEVY, Edouard, F-92240 Malakoff (FR); VIEL, Pascal, F-92190 Meudon (FR)
(74) Mandataire: Poulin, Gérard
(86) Numéro de dépôt international: PCT/FR2002/002939
(87) Numéro de publication internationale: WO 2003/018212

(56) Documents cités:
- EP-A- 0 229 563
- FR-A- 2 672 307
- FR-A- 2 761 377

## Description

### Domaine technique

La présente invention se rapporte à un procédé de greffage et de croissance d'un film organique conducteur sur une surface, au film obtenu par ledit procédé. Elle se rapporte également à l'utilisation du procédé et du film de la présente invention dans différentes applications telles que la protection de surfaces contre des agressions chimiques, la fabrication de revêtements conducteurs localisés, la fabrication de capteurs chimiques, par exemple dans les domaines de la chimie et de la biologie moléculaire, la fabrication de matériel biomédical etc.

Selon l'invention, ces films peuvent être obtenus sur toute surface conductrice ou semi-conductrice de l'électricité, par électroréduction de sels de diazonium, et en particulier de sels d'aryl diazonium, dans un solvant organique ou bien en solution aqueuse.

L'électro-réduction peut être réalisée en conditions voltamétriques, potentiostatiques ou intensiostatiques. Elle délivre des films organiques greffés sur la surface de travail, dont l'épaisseur est supérieure à une monocouche monoculaire.

Par épaisseur supérieure à une monocouche moléculaire, on entend des épaisseurs supérieures voire très supérieures à la taille du précurseur moléculaire, pris dans sa plus grande dimension, qui a donné naissance au film organique électro-greffé. Les exemples de réalisation précisés ci-après montrent par exemple que l'on peut, en partant du tétrafluoroborate de 4-nitrophényl diazonium ayant une taille d'environ 1,5 nm, obtenir des films d'une épaisseur de 100 nm ou plus.

Dans le texte ci-dessous, les références entre crochets ( [] ) renvoient à la liste de références annexées.

### ART ANTERIEUR

Les polymères conducteurs connaissent actuellement un essor important. Ils ont récemment été mis à l'honneur par le Prix Nobel de chimie accordé à Mac Diarmid et coll [1]. Ces polymères peuvent être obtenus sous forme filmogène sur des surfaces conductrices par électropolymérisation de précurseurs tels que le pyrrole, l'aniline, le thiophène, l'EDOT, etc. C'est à ces composés que nous ferons référence lorsque nous parlerons, dans la suite, de "polymères conducteurs traditionnels".

Cette électropolymérisation consiste en une électro-oxydation du précurseur, qui peut ensuite dimériser pour former un composé électro-oxydable, qui pourra donc lui-même être électro-oxydé avant de dimériser, et ainsi de suite. La formation d'un film procède par précipitation du polymère conducteur sur la surface, lorsque qu'une concentration critique est obtenue à l'interface surface/solution.

Les films de polymères conducteurs obtenus par électro-polymérisation ne sont donc pas greffés sur la surface.

Les films de polymères conducteurs traditionnels étant réalisés au moyen d'une électro-oxydation des précurseurs et de leurs oligomères successifs, ils ne peuvent être obtenus que par polarisation anodique de la surface sur laquelle on souhaite déposer le film: les métaux ou alliages nobles étant les seuls à pouvoir supporter une polarisation anodique sans être oxydés et voir leur surface se dissoudre dans la solution, on ne peut former de films de polymères conducteurs traditionnels que sur des surfaces de métaux ou d'alliages nobles, tels que l'or ou le platine.

Ainsi, il n'a pas été proposé à ce jour une solution technique pour réaliser des revêtements organiques conducteurs sur tous types de surface, y compris, et en particulier, sur des surfaces non nobles.

En outre, il n'existe aujourd'hui que très peu de solutions techniques pour obtenir un revêtement organique conducteur qui soit chimiquement greffé sur la surface, même sur des surfaces nobles, et qui puisse ainsi préserver ses propriétés de conduction, par exemple sous l'effet d'agressions, chimique ou autre, ultérieures.

Le brevet US n°5350323 mentionne qu'il est possible d'obtenir un revêtement organique de résistance électrique de contact inférieure à 10 Ohms en greffant, par électropolymérisation en régime cathodique, un film de polymère vinylique, pour peu que ce dernier subisse ensuite un post-traitement, soit thermique soit à l'aide de rayonnements ionisants.

Ce procédé ne répond cependant pas aux difficultés techniques mentionnées ci-dessus, puisque les films obtenus à l'issu de l'étape d'électro-greffage sont intrinsèquement isolants. La conduction électrique du film est entièrement due aux étapes de post-traitement thermique ou ionisant, qui sont complètement décorrélées de l'étape d'électro-greffage.

### EXPOSE DE L'INVENTION

La présente invention fournit un procédé de greffage et de croissance d'un film d'un polymère organique conducteur sur une surface conductrice ou semi-conductrice de l'électricité qui constitue une solution aux problèmes précités de l'art antérieur.

Le procédé de la présente invention est réalisé par électroréduction d'au moins un sel de diazonium précurseur dudit film organique, comprenant une étape de greffage et de croissance du film par application d'au moins un protocole consistant en l'électroréduction dudit sel de diazonium sur ladite surface polarisée électriquement à au moins un potentiel de travail plus cathodique que le potentiel d'électroréduction du sel de diazonium, lesdits potentiels étant mesurés par rapport à une même électrode de référence.

Un des points importants de l'invention est que ces films sont obtenus par polarisation cathodique de la surface. Cette polarisation est mesurée par rapport à une électrode de référence, par exemple une électrode d'argent.

Dans les techniques de l'art antérieur, les films de polymères conducteurs, tels que ceux à base pyrrole, aniline, thiophène, EDOT etc., étaient obtenus par voie anodique. Ceci permettait la fabrication de films sur des surfaces nobles, telles que l'or et le platine, mais ne permettait pas d'envisager la fabrication de films organiques conducteurs sur tous les types de surfaces conductrices ou semi-conductrices, et en particulier sur des surfaces non nobles.

Le procédé de la présente invention, donne quant à lui accès à la fois aux surfaces de métaux nobles, tels que l'or, le platine etc., et aux surfaces "non nobles", telles que les surfaces à oxyde réductible, une surface de graphite, une surface organique conductrice ou semi-conductrice, une surface d'un alliage, une surface d'un ou de polymère(s) conducteur(s) traditionnel(s) tel qu'une surface à base pyrrole, d'aniline, de thiophène, d'EDOT, d'acétylène, de polyaromatiques, etc., une surface d'un semi-conducteur, intrinsèque ou dopé, et de toute combinaison de ces composés.

En outre, le procédé de la présente invention consiste, au contraire des procédés de l'art antérieur, à produire des revêtements conducteurs, c'est à dire des états électroniques délocalisés sur une surface initiale ayant des états électroniques délocalisés.

Les films obtenus présentent en outre l'avantage de résister au rinçage, et notamment au rinçage sous ultra-sons, et sont chimiquement greffés sur la surface de l'électrode de travail.

Selon la présente invention, les films organiques conducteurs peuvent être obtenus par électro-réduction d'un sel de diazonium ou d'un mélange de sels de diazonium de formule générique R'-N₂⁺,X⁻, dans laquelle le groupement R' contient un ou plusieurs cycle(s) aromatique(s) et/ou un ou plusieurs groupement(s) insaturé(s) susceptibles de délivrer des structures conductrices, et X⁻ est un contre-ion.

Selon l'invention, les groupements R' peuvent comporter un groupement organique ou inorganique choisi parmi les groupements nitro, fluoro, bromo, chloro, iodo, thiocyanato, sulfate, sulfonate, sels de sulfonium, phosphate, phosphonate, sels de phosphonium, sels de diazonium, amine, ammonium, alcool, aldéhyde, cétone, acide carboxylique, ester, amide, nitrile, anhydride, halogénure d'acide, ainsi que parmi les groupements alkyls, alkényls, alkynyls, aryls, naphtyls, anthryls, pyryls ou poly-aromatique de degré supérieur, possédant eux-mêmes un de ces groupements.

Selon la présente invention, R' peut être choisi par exemple parmi les composés a) à f) suivants : 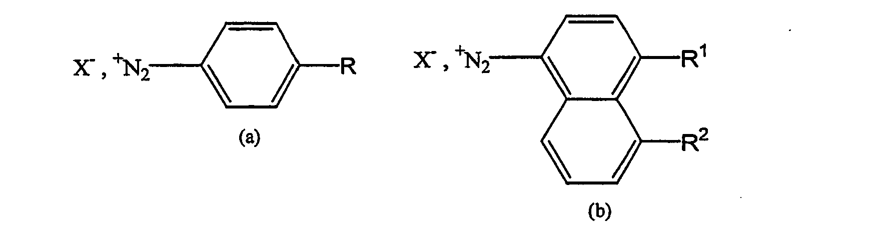 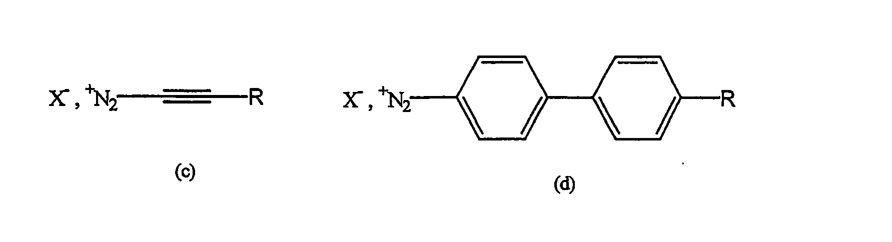 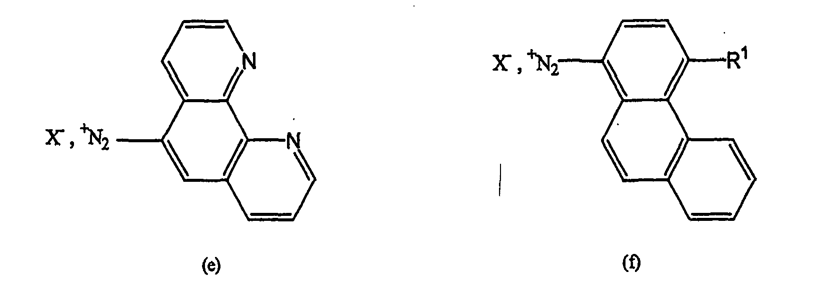 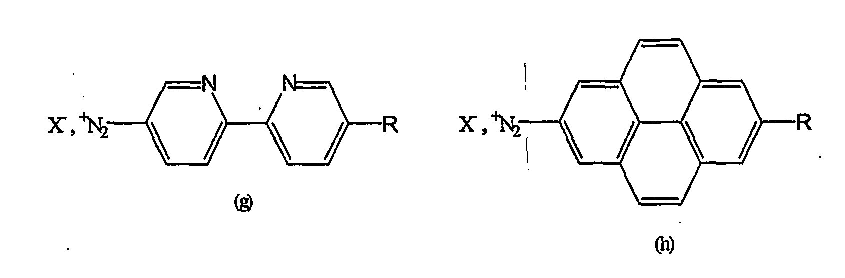 dans lesquelles, indépendamment :
R, R¹ et R², lorsqu'ils sont présents, représentent indépendamment un groupement organique ou inorganique quelconque, choisi par exemple parmi les groupements nitro, fluoro, bromo, chloro, iodo, thiocyanato, sulfate, sulfonate, sels de sulfonium, phosphate, phosphonate, sels de phosphonium, sels de diazonium, amine, ammonium, alcool, aldéhyde, cétone, acide carboxylique, ester, amide, nitrile, anhydride, ainsi que parmi les groupements alkyls, alkényls, alkynyls, aryls, naphtyls, anthryls, pyryls ou aromatique de degré supérieur, possédant un de ces groupements et/ou d'autres fonctions organiques comme une amine, un ammonium, un alcool, un aldéhyde, une cétone, un acide carboxylique, un ester, une amide, un nitrile, un anhydride, un halogénure d'acide ; et X⁻ est un contre-ion.

En effet, toutes les structures R' contenant des groupements mono- ou poly-aromatiques, de nature strictement benzénique ou bien comportant des hétéroatomes, comme, par exemple, la pyridine ou l'orthophénanthroline, ou bien encore celles comportant des triples liaisons comme celles indiquées, à titre d'exemple, ci-dessus peuvent être utilisés pour réaliser des films organiques conducteurs électro-greffés par voie cathodique selon la présente invention.

Des mélanges de ces différents composés diazonium peuvent également être utilisés selon la présente invention.

En outre, par exemple lorsque les structures R' comportent un ou des hétérocycle(s) aromatique(s), tels que la pyridine ou l'orthophénanthroline, il peut être avantageux d'inclure des sels métalliques dans le milieu de synthèse, de façon à ce qu'ils soient complexés par lesdits hétérocycles, assurent un dopage complémentaire et puissent contribuer à une conductivité électrique encore renforcée.

Chacun de ces cycles aromatiques peut être ou non substitué, dans l'une quelconque de ces positions. Des films organiques conducteurs électro-greffés ont pu être obtenus par les inventeurs aussi bien avec des diazonium aromatiques substitués qu'avec des aromatiques non substitués.

Selon l'invention, les sels de diazonium peuvent être par exemple sous la forme de tétrafluoroborates, d'halogénures, de sulfates, de phosphates, de carboxylates, de perchlorates, d'hexafluorophosphates ou d'un mélange de ces sels.

A partir des résultats mentionnés ci-dessous, il apparaît que l'augmentation d'épaisseur du film selon le procédé de la présente invention dépend notamment du sel de diazonium utilisé. On peut toutefois estimer que la résolution sur l'ajustement de l'épaisseur selon le procédé de l'invention est de l'ordre de quelques nanomètres par balayage.

En outre, quel que soit le type de molécule choisi pour réaliser l'électrogreffage, selon l'invention, il peut être ajouté au milieu réactionnel un électrolyte support pour faciliter le passage du courant électrique dans la solution, tel que, par exemple, le perchlorate de tétraéthyl ammonium.

Selon l'invention, l'électro-réduction peut être réalisée sur une cathode conductrice, de préférence dans une solution, organique ou aqueuse, contenant le(s) sel(s) de diazonium, à une concentration qui peut être comprise par exemple entre 10⁻⁴ et 1 mol/l.

Le greffage et la croissance du film ont lieu sur la cathode dès que son potentiel est supérieur, en valeur absolue, au potentiel d'électro-réduction du sel de diazonium, par rapport à une électrode de référence.

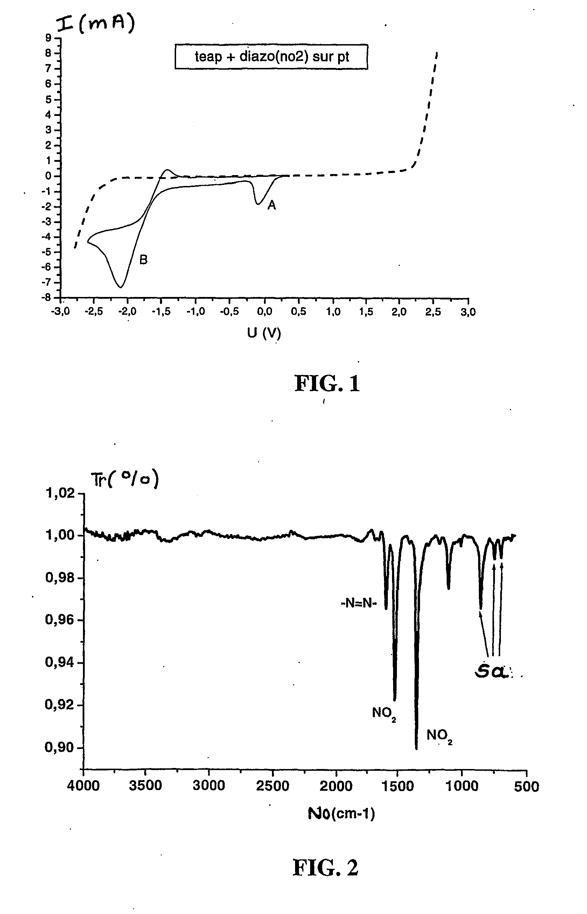

Ce potentiel varie en fonction de la nature du substituant organique R'. Pour le tétrafluoroborate de 4-nitrophényl diazonium, par exemple, l'électro-réduction du sel de diazonium se produit à un potentiel voisin de E = - 0,1 V/(Ag⁺/Ag) comme le montre la figure 1 annexée.

Les inventeurs ont observé qu'il est possible d'obtenir un greffage rapide et homogène en épaisseur de manière surprenante en imposant à la surface sur laquelle le film est greffé un potentiel plus cathodique que le potentiel d'électroréduction du diazonium.

Dans l'exemple de la figure 1, ils ont par exemple choisi d'opérer en conditions voltammétriques, avec un potentiel d'arrêt à -2,9 V/(Ag⁺/Ag), comme détaillé dans l'exemple 1 ci-dessous. Sur cette figure, par exemple, la zone de potentiel adéquate est située sur la branche cathodique au-delà, en valeur absolue, de + 0,3 V/(Ag⁺/Ag), puisque cette valeur est celle du pied du pic d'électro-réduction du sel de diazonium. Sur cette figure, les balayages de potentiel ont été effectués entre +0,3 et -2,9 V/(Ag⁺/Ag).

Selon l'invention, le potentiel d'électroréduction du sel de diazonium peut être appliqué de différentes manières, nommées « protocoles d'application du potentiel » ci-après :
- Soit en polarisant cathodiquement l'électrode de travail à la valeur adéquate par rapport à une électrode de référence, par exemple une électrode d'argent, c'est à dire à la valeur définie selon la présente invention. Il s'agit d'un protocole appliqué en mode potentiostatique référencé.
- Soit en polarisant cathodiquement l'électrode de travail par rapport à une contre-électrode, de façon à ce que son potentiel, mesuré par rapport à une électrode de référence, soit correct, c'est à dire tel que défini selon la présente invention. Il s'agit d'un protocole appliqué en mode potentiostatique.
- Soit en imposant un courant dans un circuit électrique dont la surface sur laquelle le film doit être greffé et croître est l'une des électrodes, de préférence la cathode, de façon à ce que le potentiel de cette surface soit tel que défini selon la présente invention. Il s'agit d'un protocole appliqué en mode intentiostatique.

Pour chaque mode d'application du potentiel dans ces différents protocoles utilisables selon le procédé de la présente invention, au sens défini ci-dessus, il est également possible, selon l'invention, de faire varier le « protocole d'application » par exemple de la manière exposée ci-dessous :
- Soit le potentiel (modes potentiostatiques) ou le courant (mode intentiostatique) sont appliqués de façon à avoir une valeur fixe : on réalise ainsi respectivement un « protocole à potentiel fixe » ou à « courant fixe » pendant un temps de synthèse donné ;
- Soit le potentiel (modes potentiostatiques) ou le courant (mode intentiostatique) imposés sont variables dans le temps. On peut par exemple les faire varier d'une valeur initiale à une valeur finale, avec une vitesse de balayage, constante ou non, comme par exemple dans le cas de l'exemple de la figure 1. Une fois la valeur finale atteinte, on peut appliquer le même protocole pour redescendre à la valeur initiale.
   Ainsi, dans le procédé de la présente invention, au moins un protocole peut être appliqué en mode potentiostatique, et/ou en mode intensiostatique.
   Ainsi, dans le procédé de la présente invention, dans au moins un protocole, le potentiel de travail peut être variable et/ou un courant de travail variable peut être imposé à ladite surface.
   En outre, selon l'invention, la croissance du film peut être réalisée par application successive de plusieurs protocoles, choisis indépendamment parmi des protocoles à potentiel de travail imposé fixe ou variable et des protocoles à courant de travail imposé fixe ou variable, chaque protocole étant appliqué sur ladite surface pendant une durée déterminée identique
ou différente de celle des autres protocoles.

Par exemple, selon l'invention, tous les protocoles appliqués sur ladite surface peuvent être identiques.

Par exemple aussi, selon l'invention, le greffage et la croissance du film peuvent être obtenus par une combinaison de protocoles à potentiel imposé fixe ou variable et de protocoles à courant imposé fixe ou variable.

Par exemple aussi, dans au moins un des protocoles appliqués, le potentiel de ladite surface peut être imposé de manière à former un créneau triangulaire de potentiel.

Par exemple aussi, dans au moins un des protocoles appliqués, un créneau triangulaire de courant peut être imposé à ladite surface.

Par exemple aussi, dans au moins un des protocoles appliqués, le potentiel de ladite surface peut être imposé de manière à former un créneau carré de potentiel.

Par exemple aussi, dans au moins un des protocoles appliqués, un créneau carré de courant peut être imposé à ladite surface.

Les inventeurs ont en effet mis en évidence qu'il est possible, de manière inattendue, d'augmenter encore l'épaisseur du film organique obtenu par le procédé de la présente invention, en répétant plusieurs fois, successivement, des protocoles d'application du potentiel ou du courant tel que décrit ci-dessus.

Ainsi, selon l'invention, la croissance du film en épaisseur est obtenue et peut être contrôlée par application d'un ou de plusieurs protocole(s), conduisant au potentiel voulu, jusqu'à obtenir l'épaisseur de film désirée.

Selon l'invention, le nombre de protocoles appliqués pour greffer et faire croître le film organique conducteur dépend de l'objectif recherché dans le cadre de la présente invention. Il peut varier par exemple de 1 à 10000.

Selon l'invention, la durée d'un protocole d'application dépend également de l'épaisseur de film désirée. Elle est en général par exemple de 1 à 500 secondes. L'homme du métier saura adapter cette durée suivant l'objectif recherché dans le cadre de la présente invention.

Le procédé de la présente invention permet, de manière inattendue, de fabriquer des films couvrants d'épaisseur ajustable, supérieure à la monocouche moléculaire, c'est-à-dire des films dont l'épaisseur est supérieure ou très supérieure à la plus grande dimension de la molécule de sel de diazonium utilisée comme précurseur pour obtenir le film.

Selon l'invention, il est par exemple possible, de manière inattendue, d'obtenir des films dont l'épaisseur est comprise entre 2 nm et 500 nm avec le tétrafluoroborate de 4-nitrophényl diazonium, alors que cette molécule a une taille de l'ordre de 1,5 nm.

En effet, lorsque l'on utilise par exemple les conditions de synthèse de la figure 1, c'est-à-dire en appliquant un protocole dans lequel on réalise un balayage linéaire de potentiel de +0,3 à -2,9 V/(Ag⁺/Ag) et retour, à une vitesse de balayage de 50 mV/s, sur une lame de platine plongée dans une solution à 10⁻³ mol/l de tétrafluoroborate de 4-nitrophényl diazonium dans une solution à 5.10⁻² mol/l de TEAP dans l'acétonitrile, on observe la formation d'un film de 3 nm pour 6 balayages, et d'un film de 100 nm pour 20 balayages.

Les inventeurs ont mis en évidence que lorsque la même expérience est réalisée avec le tétrafluoroborate de 4-bromobenzyle diazonium, un film de 2 nm est obtenu après 1 balayage selon le procédé de la présente invention. Dans les mêmes conditions de synthèse, un mode opératoire comportant 5 balayages conduit à des films de 50 nm.

Les inventeurs pensent que ces différents comportements sont une conséquence des structures moléculaires formées par la réaction des diazoniums avec les couches greffées, et qui peuvent conduire à des édifices plus ou moins conjugués, et donc plus ou moins conducteurs de l'électricité.

La dépendance en fonction du substrat métallique d'origine sur lequel le procédé est appliqué semble faible puisqu'en effectuant par exemple, sur une surface de laiton, 20 balayages linéaires aller-retour de potentiel entre + 0,3 et -2,9 V/(Ag⁺/Ag) à une vitesse de 50 mV/s, d'une solution à 10⁻³ mol/l de tétrafluoroborate de 4-nitrophényl diazonium et 5.10⁻² mol/l de perchlorate de tétraéthyl-ammonium dans l'acétonitrile, on obtient un film organique conducteur dont l'épaisseur est également de 100 nm, la même que celle obtenue sur du platine.

Les essais réalisés semblent indiquer que, lors d'un protocole de balayage linéaire en potentiel, les vitesses de balayage n'ont que peu d'influence. Avantageusement, selon l'invention, des vitesses de balayage comprises entre 10 mV/s et 10 V/s seront utilisées.

Dans tous les cas, selon l'invention, l'électrode de travail, c'est à dire la surface sur laquelle le film est greffé, et la contre-électrode peuvent être au contact de la même solution ou bien de solutions différentes pendant l'électrogreffage.

La présente invention' fourni donc également un procédé de greffage et de croissance d'un film organique conducteur sur une surface conductrice ou semi-conductrice de l'électricité par électroréduction d'un sel de diazonium précurseur dudit film organique, comprenant une première étape de greffage et de croissance du film par application d'au moins un protocole consistant en l'électroréduction d'un premier sel de diazonium sur ladite surface polarisée électriquement à au moins un potentiel de travail plus cathodique que le potentiel d'électroréduction du premier sel de diazonium, lesdits potentiels étant mesurés par rapport à une même électrode de référence ; et une deuxième étape de greffage et de croissance du film par électroréduction d'un deuxième sel de diazonium différent dudit premier sel de diazonium.

Les applications successives de protocoles identiques ou différents tels que décrits ci-dessus peuvent donc être effectuées soit en travaillant dans la même solution de sel de diazonium, soit en changeant de solution.

Dans tous les cas, selon l'invention, l'électrode de travail et la contre-électrode peuvent être placées dans un seul compartiment ou bien dans des compartiments séparés pendant l'électrogreffage.

Le procédé de la présente invention permet donc de fabriquer des films organiques conducteurs par électro-réduction de sels de diazonium sur tous types de surfaces conductrices ou semi-conductrices de l'électricité, et en particulier sur les surfaces non nobles.

Pour des films possédant des marqueurs rédox tels que des films nitro, les inventeurs ont mis en évidence que la charge consommée pour réduire tous ces marqueurs est corrélée à l'épaisseur du film. Cette caractéristique de la présente invention montre que les films obtenus selon le procédé de la présente invention sont conducteurs de l'électricité, et se forment par croissance sur eux-mêmes à mesure de l'application des protocoles successifs.

Outre les avantages précités, les films obtenus selon l'invention présentent aussi l'avantage d'être conducteurs à la fois en solution et à sec, même après des rinçages successifs. Ces films sont donc capables d'une conduction électrique duale, c'est à dire qu'ils sont conducteurs intrinsèques, du fait de leur structure de type polyaromatique, et peuvent être dopés par les substances électrolytiques présentes dans leur solution de synthèse ou insérées ultérieurement. Selon l'invention, il est donc possible d'ajouter des agents de dopage au milieu de synthèse du film. Ces agents de dopages peuvent être ceux classiquement utilisés par l'homme du métier pour doper des polymères organiques.

En outre, le procédé de la présente invention permet de fabriquer des films organiques pouvant, de façon simultanée, assurer une protection vis-à-vis du milieu extérieur, par exemple contre la corrosion, et/ou offrir un revêtement greffé présentant des groupements fonctionnels organiques tels que ceux précités et/ou promouvoir ou maintenir une conductivité électrique à la surface des objets traités.

De plus, les films de la présente invention présentent l'avantage qu'il est possible de faire croître sur ceux-ci des films de polymères électro-initiés, à la façon de ce qui se fait sur les surfaces de métaux. Par exemple, il est possible d'obtenir l'électro-greffage de monomères vinyliques, comme le méthyl méthacrylate (MMA) sur une surface préalablement recouverte d'un film organique objet de la présente invention. En effet, on sait d'après les demandes de brevet EP-A-038244 et WO-A-0029043, ainsi que d'après les références [3] et [4] indiquées sur la liste de références annexée que l'électro-greffage de monomères vinyliques comme le MMA ne peut intervenir que sur des surfaces conductrices de l'électricité.

Selon la présente invention, un revêtement tel qu'un revêtement de métal, de polymères conducteurs traditionnels, de polymères chargés etc peut donc être électrodéposé sur le film de la présente invention par toute technique connue de l'homme du métier. En outre, tous types de composés tels que des films conducteurs à base d'aryl diazonium, des monomères vinyliques, des molécules à cycles tendus, etc peuvent être électrogreffés sur le film de la présente invention également par toute technique connue de l'homme du métier.

Selon l'invention, lorsque la nouvelle couche déposée est elle-même conductrice, par exemple dans le cas de l'électrodéposition de métaux, de polymères conducteurs ou de films organiques à partir de sels d'aryl diazonium ou de sels d'acides carboxyliques, etc, le procédé de la présente invention peut être renouvelé sur la nouvelle couche précitée.

Il est donc également possible, grâce à la présente invention, de fabriquer des structures conductrices multicouches par exemple en utilisant des films intercalaires organiques basés sur la présente invention.

Selon l'invention, une couche d'un polymère isolant peut également être déposé sur le film conducteur. Ainsi, le procédé de la présente invention peut comprendre en outre une étape de dépôt d'un film isolant sur ledit film organique conducteur. Des exemple de polymères isolants sont cités dans les exemples ci-dessous. D'autres polymères tels que ceux-ci pourront bien entendu être utilisés dans le cadre de la présente invention.

Les films organiques obtenus selon la présente invention constituent un revêtement protecteur greffé, qui résiste à des potentiels anodiques au-delà du potentiel de corrosion de la surface conductrice sur laquelle ils ont été électro-greffés.

Il est donc possible, selon la présente invention, moyennant le dépôt préalable d'une couche organique conductrice à base de sels d'aryl diazonium, de réaliser des dépôts par polarisation anodique sur la surface d'un objet, alors que c'était impossible sur la surface de cet objet sans la présence du film de la présente invention, puisque la surface de cet objet se serait oxydée pendant la tentative de dépôt par polarisation anodique. Il est ainsi possible de déposer, par exemple, des polymères conducteurs traditionnels ou certains monomères vinyliques, à la demande inverse, c'est-à-dire par électropolymérisation en régime anodique, sur des objets constitués, en volume ou en surface, de métaux non nobles, ce qui était impossible avec les techniques de l'art antérieur.

Le procédé de la présente invention peut donc comprendre en outre par exemple une étape de dépôt d'un film d'un polymère vinylique par électropolymérisation du monomère vinylique correspondant sur le film de polymère conducteur.

Le procédé de la présente invention peut également être utilisé pour réaliser des interfaces organique/conducteur de grande solidité. En effet, les films organiques de la présente invention sont conducteurs à toute épaisseur. Lorsqu'ils sont peu réticulés, ils peuvent constituer des "éponges conductrices", avec une surface conductrice d'aire apparente bien supérieure à la surface d'origine sur laquelle ils sont greffés. Ceci permet de réaliser une fonctionnalisation beaucoup plus dense que sur la surface de départ sur laquelle ils sont greffés.

Le procédé de la présente invention permet également d'améliorer la solidité d'interface polymère/métal via des réseaux interpénétrés. En effet, selon l'invention, il est par exemple possible d'électro-polymériser des monomères, tels que des monomères vinyliques, des molécules à cycles tendus, des précurseurs d'autres polymères conducteurs etc., sur les films de la présente invention.

Le démarrage de la polymérisation de cet autre polymère a lieu au sein même du film de la présente invention. Ceci assure donc une interpénétration de fait de l'autre polymère électro-initié avec la couche organique de la présente invention, et donc une grande solidité de l'interface entre la couche organique conductrice de la présente invention et le film polymère électro-greffé sur cette couche.

De ce fait, la présente invention permet d'établir deux interfaces très solides métal/couche de diazonium électro-greffé et couche de diazonium électro-greffé/polymère, là où une interface polymère/métal directe aurait été moins solide par les procédés de l'art antérieur.

La présente invention permet en conséquence de réaliser des revêtements organiques greffés et conducteurs, d'épaisseur ajustable, sur des surfaces conductrices ou semi-conductrices.

Le procédé de la présente invention peut par exemple être utilisé pour protéger des métaux non nobles contre des agressions extérieures, telles que celles produites par des agents chimiques, telles que la corrosion etc. Cette protection originale conférée grâce au procédé de l'invention peut, par exemple, s'avérer particulièrement intéressante dans la connectique ou la contactique, où les propriétés de conduction électrique sont améliorées et/ou préservées.

Dans une autre application, le procédé de la présente invention peut par exemple être utilisé pour la fabrication de revêtements conducteurs localisés, par exemple pour la microélectronique, à ses techniques et à ses applications telles que des nouvelles générations de têtes d'imprimante à jet d'encre, capteurs électroniques utilisables in vivo, en interventionnel ou en implantable, biopuces, microfluidique, lab-on-chips, etc.

Dans une autre application, le procédé de la présente invention peut par exemple être utilisé pour la fabrication de couches organiques conductrices dont le potentiel électrique peut être contrôlé a posteriori, pour servir au pilotage, à l'échelle moléculaire, de diverses propriétés physico-chimiques de ces films. Cette mise sous potentiel du film conducteur peut par exemple servir pour déclencher toute réaction électrochimique connue de l'homme de l'Art, comme, par exemple, l'électro-déposition de métaux, de polymères, chargés ou non, ou encore l'oxydo-réduction de tout couple rédox ayant un potentiel standard compatible avec la stabilité du film, ou encore, par exemple, l'électro-expulsion, par répulsion électrostatique, d'espèces chargées telles que des polymères, molécules, ions atomiques, etc., déposées sur la surface du film conducteur, par exemple par adsorption non spécifique.

Dans une autre application, le procédé de la présente invention peut par exemple être utilisé pour la fabrication de sous-couches greffées couvrantes, sur tous types de surfaces conductrices ou semi-conductrices, sur lesquelles on peut réaliser tous types de fonctionnalisations, et notamment celles utilisant l'électrochimie, comme, par exemple, l'électro-déposition, l'électro-greffage de monomères vinyliques, de cycles tendus, de sels de diazonium, de sels d'acide carboxyliques, d'alcynes, de dérivés de Grignard etc. Cette sous-couche peut ainsi constituer un apprêt de qualité pour la re-métallisation d'objets, ou pour l'électro-greffage de groupements fonctionnels, par exemple dans le domaine du biomédical, des biotechnologies, des capteurs chimiques, de l'instrumentation etc.

En outre, selon l'invention, les films organiques à base de sels de diazonium de la présente invention sont conducteurs à toute épaisseur. Ainsi, lorsqu'ils sont peu réticulés, ils peuvent constituer des "éponges conductrices", avec une surface conductrice d'aire apparente bien supérieure à la surface d'origine sur laquelle ils sont greffés. Ceci permet d'envisager des densités de fonctionnalisation plus importantes que sur la surface de départ sur laquelle ils sont greffés. Ceci est particulièrement intéressant, par exemple, dans la fixation de molécules ayant une activité biologique, par exemple dans le domaine du biomédical ou des biotechnologies, dans celle de molécules encapsulantes, ou encore dans celle l'électro-greffage de polymères. En effet, la conduction dans l'épaisseur de la couche organique conductrice assure un démarrage de la polymérisation au sein même de cette couche, et donc une interpénétration de fait du polymère électro-greffé avec la couche organique de la présente invention. Ceci assure donc également une grande solidité particulière de l'interface entre la couche organique conductrice et le film polymère électro-greffé sur cette couche, intéressantes pour les applications dans le domaine de l'adhésion.

La présente invention peut donc être utilisée par exemple dans la fabrication d'un revêtement encapsulant pour des composants électroniques, dans la fabrication d'un revêtement hydrophile, dans la fabrication d'un revêtement biocompatible, pour la fabrication d'un film utilisable en tant que primaire d'adhésion, en tant que support de post-fonctionnalisation organique, en tant que revêtement à propriétés d'absorption optique ou en tant que revêtement à propriétés de furtivité.

D'autres caractéristiques et avantages de la présente invention apparaîtront encore à l'homme du métier à la lecture des exemples ci-dessous donnés à titre illustratif et non limitatif, en référence aux figures annexées.

### BREVE DESCRIPTION DES FIGURES

- Figure 1 : Représentation graphique des réponses voltammétriques d'une solution à 10⁻⁴ mol/l de tétrafluoroborate de 4-nitrophényl diazonium dans l'acétonitrile, en présence de 5x10⁻² mol/l de TEAP, sur une électrode de platine. La contre électrode est également une électrode de platine, et l'électrode de référence une électrode Ag/Ag+.
- Figure 2 : Spectre infrarouge d'un film organique de 30nm obtenu sur électrode de platine par électroréduction d'une solution de tétrafluoroborate de 4-nitrophényl diazonium dans l'acétonitrile.
- Figure 3 : Spectre XPS d'un film organique de 30nm obtenu sur électrode de platine par électrodéposition d'une solution de tétrafluoroborate de 4-nitrophényl diazonium dans l'acétonitrile.
- Figure 4 : Voltammogramme des lames de l'exemple n°1 (épaisseur 30nm) plongées dans l'acétonitrile en présence d'électrolyte support.
- Figure 5 : Voltammogramme des lames de l'exemple n°1 plongées dans l'acétonitrile en présence d'électrolyte support après un balayage (1b) (pointillés) et après 10 balayages (10b) (trait continu).

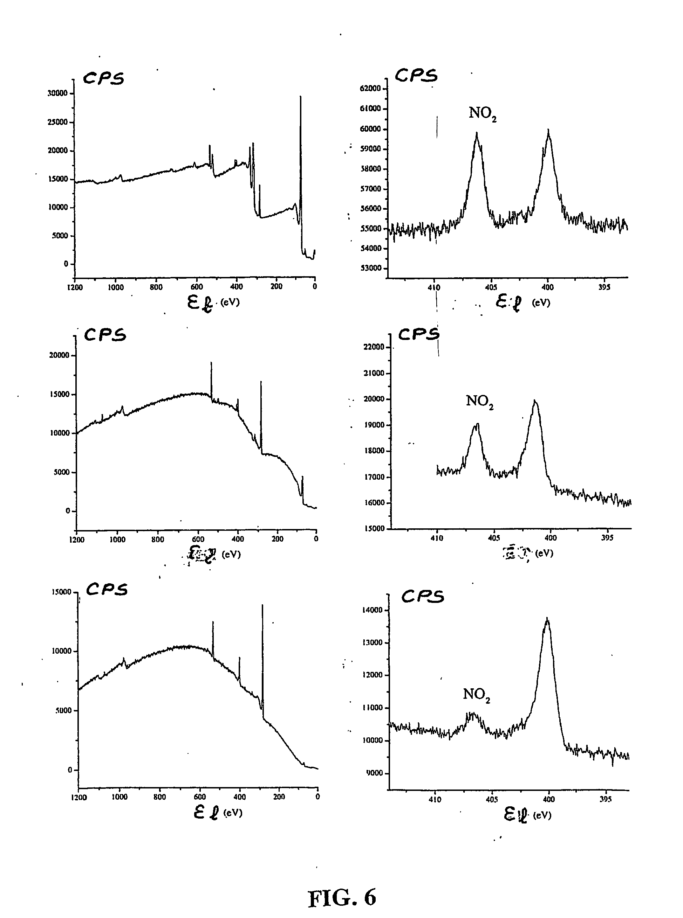

- Figure 6 : Spectres XPS globaux (graphiques de gauche) (tous niveaux de coeur) et spectres de niveau de coeur de l'azote (graphiques de droite) relatifs à l'élimination des groupements NO₂ du film organique obtenu par électro-greffage du tétrafluoroborate de nitrophényldiazonium, par réduction électrochimique ultérieure. En haut, film mince de 4nm dans son état initial de fabrication ; au centre film de 30nm ayant subit un cycle de réduction électrochimique des groupements nitro au cours de sa synthèse ; en bas, film de 30nm ayant subit quatre cycles de réduction électrochimique des groupements nitro.
- Figure 7a) : Spectre initial d'un film organique obtenu par électrogreffage du tétrafluoroborate de paranitrophényldiazonium de 30nm.
- Figure 7b) : Spectre du film de la figure 7a) après élimination électrochimique des groupements nitro.
- Figure 8 : Spectre infrarouge d'un film PMMA de 80 nm d'épaisseur obtenu sur une électrode de platine préalablement recouverte par un film organique conducteur de 3nm, obtenu par électro-réduction de sels de diazonium.
- Figure 9 : Voltammogrammes de balayages de potentiel dans une solution de tétrafluoroborate de 4-bromobenzyle diazonium dans l'acétonitrile, obtenus par polarisation d'une électrode de platine.
- Figure 10 : Spectre en reflexion (Tr (%)) en fonction du nombre d'onde Nₒ en cm⁻¹ : sur cette figure, le spectre du haut est celui d'un film de bromo benzyle (BB) greffé sur une surface métallique d'or selon le procédé de la présente invention, et le spectre du bas correspond à l'échantillon précédent sur lequel est greffé un film de PMMA.
   Sur ces figures, Tr (%) indique la transmittance en pourcentage, Sa les substitutions aromatiques (fig.2), Nₒ le nombre d'onde en cm⁻¹, CPS indique le nombre de coups par seconde (nombre d'électrons d'une énergie donnée lors de l'enregistrement du spectre XPS), ε₁ indique l'énergie de liaison (« binding energy ») en eV, U (V/Ag⁺/Ag) le potentiel en Volts de la surface sur laquelle le film est électrodéposé par rapport à une électrode de référence Ag⁺/Ag , et I l'intensité en mA.

### EXEMPLES

### EXEMPLE 1) : MAITRISE DE L'EPAISSEUR DES FILMS A POTENTIEL IMPOSE

Dans une première expérience, des réponses voltammétriques d'une solution à 10⁻⁴ mol/l de tétrafluoroborate de 4-nitrophényl diazonium dans l'acétonitrile, en présence de 5x10⁻² mol/l de TEAP, sur une électrode de platine sont mesurées. La contre électrode est également une électrode de platine, et l'électrode de référence une électrode Ag/Ag+.

Les résultats de cette première expérience sont montrés sur la figure 1 annexée. Sur cette figure, la vague « A » est celle correspondant à l'électroréduction du sel de diazonium, la vague « B » est due à la réduction des groupements nitro, et la courbe en pointillés est celle du TEAP seul.

Dans une deuxième expérience on polarise, en conditions voltammétriques, une électrode de platine dans une solution contenant 10⁻³mol/l de tétrafluoroborate de 4-nitrophényl diazonium et 5x10⁻² mol/l de perchlorate de tétraéthyl ammonium (TEAP) dans l'acétonitrile.

Les balayages de potentiels sont appliqués de + 0,3 V/(Ag⁺/Ag) à - 2,9 V/(Ag⁺/Ag), à - 200 mV/s.

Après récupération et rinçage des électrodes de platine, dans l'eau puis l'acétone pendant 5 minutes sous ultra-sons à chaque fois, on observe des films organiques homogènes. On mesure une épaisseur de 3 nm après 1 balayage, 30 nm après 10 balayages et 100 nm après 20 balayages.

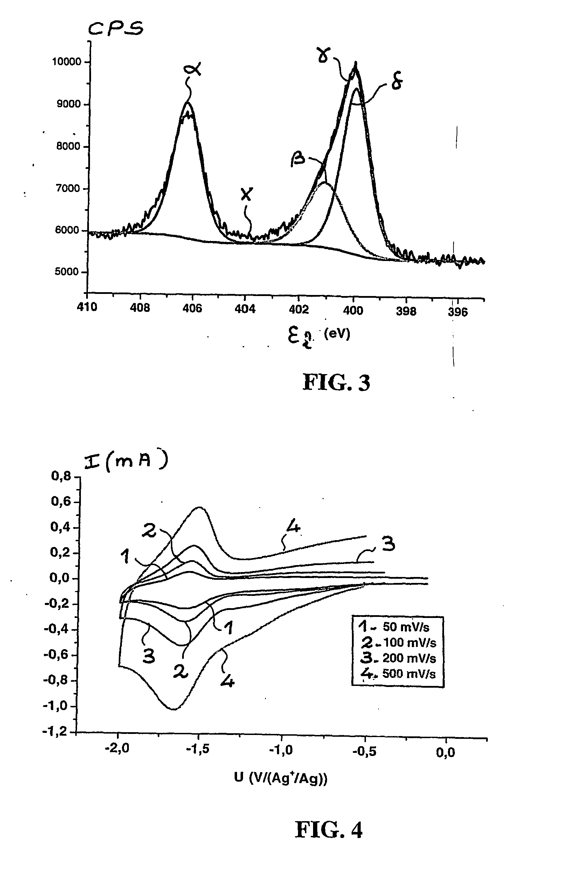

Les spectres infra-rouges (IR) et XPS (région N1s) de l'échantillon de 30 nm sont présentés sur les Figures 2 et 3 annexées, respectivement. Ils montrent la présence d'un film organique comportant encore des groupements nitro (IR), dont une partie au moins a été modifiée, puisque deux types d'azotes sont identifiés (XPS). Outre les azotes mesurés à 406,3 eV qui correspondent aux groupements nitro, on observe une composante très intense vers 400 eV, qui peut correspondre à des groupements azotés, probablement réduits (NH₂ ou N=N) et impliqués dans les liens entre cycles aromatiques de couches successives.

L'analyse du spectre XPS global révèle une stoechiométrie approchant C₁₂O_{2,6}N_{2,6}.

Sur la Fig.2, les pics à 1350 et 1526 cm⁻¹ sont dus aux groupements nitro, le pic observé à 1599 est dû à des ponts diazos (-N=N-), les pics à 702 ; 752 et 856 cm¹ sont dus à des substitutions aromatiques (ortho, méta et para). Ces derniers suggèrent que les radicaux issus de la réduction des sels de diazonium aient réagi avec les cycles aromatiques, et que certains de ces radicaux sont des espèces du type R'-N=N•. De telles structures seraient compatibles avec la formation d'un film épais, et dont l'épaisseur croît avec le nombre de balayages voltamétriques, c'est-à-dire avec la charge ayant traversé le circuit.

### EXEMPLE 2) : MAITRISE DE L'EPAISSEUR DES FILMS A POTENTIEL IMPOSE

On polarise, en conditions voltammétriques, une électrode de platine dans une solution contenant 10⁻³mol/l de tétrafluoroborate de 4-bromobenzyle diazonium et 5x10⁻² mol/l de perchlorate de tétraéthyl ammonium (TEAP) dans l'acétonitrile.

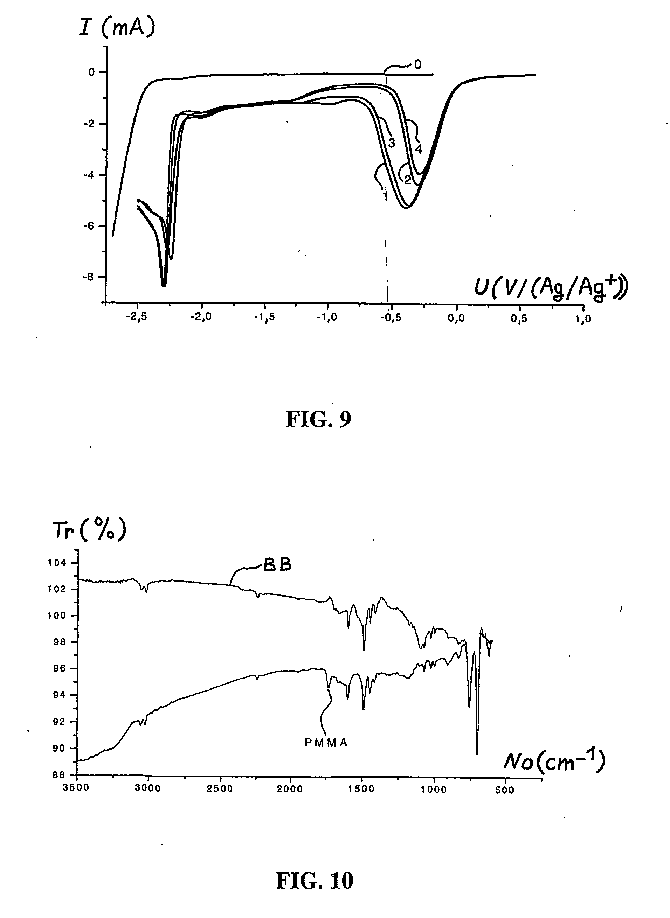

Les balayages de potentiels sont appliqués de + 0, 5 V/(Ag⁺/Ag) à - 2, 5 V/(Ag⁺/Ag), à - 20 mV/s, comme indiqué sur la figure 9.

Cette figure 9 représente des voltammogrammes obtenus pour les 4 premiers balayages de potentiel, référencés 1, 2, 3 et 4 respectivement, de la solution de tétrafluoroborate de 4-bromobenzyle diazonium dans l'acétonitrile. La référence 0 indique le résultat obtenu avec la solution ne contenant que l'électrolyte support.

Le pic vers - 0,25 V/(Ag⁺/Ag) est celui de la réduction du sel de diazonium, celui vers - 2,25 V/(Ag⁺/Ag) est dû à la réduction des groupements benzyliques greffés sur la surface.

On observe que l'intensité de ce dernier pic augmente en fonction du nombre de balayages, ce qui traduit l'épaississement du film.

Après récupération et rinçage des électrodes de platine, dans l'eau puis l'acétone pendant 5 minutes sous ultra-sons à chaque fois, on observe des films organiques homogènes. On mesure une épaisseur de 5 nm après 1 balayage, 50 nm après 10 balayages et 150 nm après 20 balayages.

### EXEMPLE 3) : MAITRISE DE L'EPAISSEUR DES FILMS A COURANT IMPOSE

On polarise, en conditions intentiostatiques, une électrode de platine dans une solution contenant 10⁻³mol/l de tétrafluoroborate de 4-bromobenzyle diazonium et 5x10⁻² mol/l de perchlorate de tétraéthyl ammonium (TEAP) dans l'acétonitrile.

On impose des créneaux de courant de 0,2 µA d'une durée de ls, suivie d'une durée de repos de 3s.

Après récupération et rinçage des électrodes de platine, dans l'eau puis l'acétone pendant 5 minutes sous ultra-sons à chaque fois, on observe des films organiques homogènes. On mesure une épaisseur de 3 nm après 1 créneau, 30 nm après 10 créneaux et 100 nm après 20 créneaux.

### EXEMPLE 4) : CONDUCTION ELECTRIQUE DES FILMS

Les lames recouvertes d'un film électro-greffé de l'exemple 1 sont replongées dans une solution d'acétonitrile seul, contenant 5.10⁻² mol/l de perchlorate de tétraéthyl ammonium (TEAP). Elles sont à nouveau utilisées comme cathodes, et on les soumet à une série de balayages entre - 0,1 V/(Ag⁺/Ag) et - 2,0 V/(Ag⁺/Ag), à des vitesses comprises entre -50 et -500 mV/s.

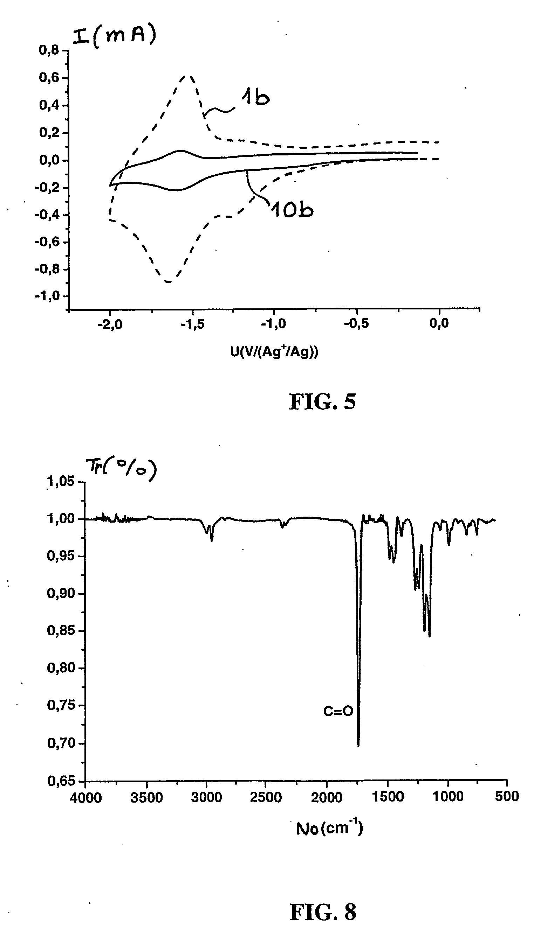

Les résultats de cette figure sont exposés sur la figure 4 annexée. La légende de cette figure montre la correspondance entre les références des courbes et la vitesse de balayage appliquée.

On observe les vagues caractéristiques des groupements nitro, même sur les échantillons d'épaisseur élevée; c'est à dire à 30 nm et au-delà, ce qui serait impossible si le film n'était pas conducteur

Deux éléments complémentaires permettent de prouver qu'il s'agit bien des groupements nitro du film greffé, et que les nitro sont réduits en volume, et pas seulement au voisinage de l'interface platine/organique.

Tout d'abord, les intensités des vagues voltamétriques varient linéairement avec la vitesse de balayage: ceci montre que ces groupements nitro ne sont pas soumis à la diffusion, mais se comportent comme s'ils étaient adsorbés sur la surface de l'électrode.

Ensuite, lorsque l'on multiplie les balayages sur un échantillon donné, on observe que les pics finissent par diminuer en intensité, révélant qu'une chimie couplée consomme les produits de réduction des groupements nitro, qui ne sont finalement pas tous restaurés par la vague anodique à mesure que les balayages sont opérés.

Nous avons réalisé, pour deux épaisseurs de films, à 6 et 30 nm, un nombre de balayages suffisants pour aboutir à des voltammogrammes plats.

Les résultats sont montrés sur la figure 5 annexée. Sur cette figure, la courbe en trait pointillé (1b) indique le voltammogramme d'une lame de l'exemple 1 (épaisseur 30nm) plongée dans l'acétonitrile en présence d'électrolyte support après un balayage, et la courbe en trait continu (10b) indique le voltammogramme d'une même lame plongée dans l'acétonitrile en présence d'électrolyte support après 10 balayages.

En intégrant les courbes voltamétriques, nous avons pu déterminer la quantité de charge consommée pour réduire les groupements nitro. On obtient :
- Epaisseur 6 nm : Q=6 nm = 216 µC/cm² ;
- Epaisseur 30 nm : Q=30 nm = 1058 µC/cm².

On constate donc que la quantité de charge consommée pour réduire les groupements nitro est proportionnelle à l'épaisseur : Q(30 nm)/Q(6 nm) 4,9 ≈ 30/6.

Ceci est compatible avec une réduction des groupements nitro dans toute l'épaisseur du film, et donc avec le fait que le film est conducteur de l'électricité.

Des résultats complémentaires permettent d'attester de la disparition des groupements nitro dans le volume du film sous l'action électrochimique.

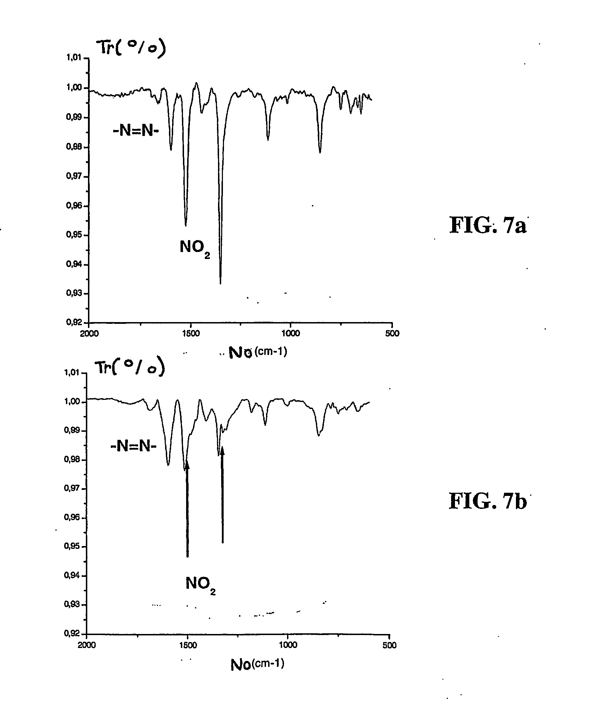

Les spectres XPS montrés sur la figure 6 annexée, et IRRAS sur les figures 7a) et 7b) annexées d'un film organique obtenu par électro-réduction du tétrafluoroborate de nitrophényldiazonium, avant et après élimination électrochimique des groupements nitro fournissent ces résultats.

Sur la figure 6, sont représentés les spectres globaux (graphiques de gauche) (tous niveaux de coeur) et spectres de niveau de coeur de l'azote (graphiques de droite) (nitro à 406 eV, polymère à 400eV) relatifs à l'élimination des groupements NO₂ du film organique obtenu par électro-greffage du tétrafluoroborate de nitrophényldiazonium, par réduction électrochimique ultérieure. En haut, film mince de 4nm dans son état initial de fabrication ; au centre film de 30nm ayant subit un cycle de réduction électrochimique des groupements nitro au cours de sa synthèse ; en bas, film de 30nm ayant subit quatre cycles de réduction électrochimique des groupements nitro. La signature des nitro a presque disparue. La disparition des groupements nitro s'est faite sans perdre d'épaisseur du film comme l'attestent les enveloppes des spectres globaux et l'examen visuel des film.

La figure 7a) représente un spectre initial d'un film organique obtenu par électrogreffage du tétrafluoroborate de paranitrophényldiazonium de 30nm, et la figure 7b) représente un spectre du film de la figure 7a) après élimination électrochimique des groupements nitro.

Le film a conservé son épaisseur initiale comme l'attestent les bandes relatives au squelette du polymère et l'examen visuel.

Ces résultats ont été obtenus à partir de films de 30 nm électrogreffés par voltamétrie cyclique, après 4 cycles aller/retour entre -0.2 et -2.0 V/(Ag⁺/Ag) à la vitesse de -50 mV.s⁻¹, sur une surface de platine en présence d'une teneur de tétrafluoroborate de nitrophényl diazonium de 10⁻³ M.

### EXEMPLE 5) : CONDUCTION ELECTRIQUE DES FILMS

On polarise, en conditions voltammétriques, une électrode de platine dans une solution contenant 10⁻³mol/l de tétrafluoroborate de 4-bromobenzyle diazonium et 5x10⁻² mol/l de perchlorate de tétraéthyl ammonium (TEAP) dans l'acétonitrile.

Les balayages de potentiels sont appliqués de + 0,5 V/(Ag⁺/Ag) à - 2,5 V/(Ag⁺/Ag), à - 20 mV/s, comme indiqué sur la figure 9.

On observe un gain en épaisseur rapide en fonction du nombre de balayages de potentiel, comme indiqué dans l'exemple 2, alors que la surface n'est manifestement pas passivée : le pic situé vers - 0,25 V/(Ag⁺/Ag) correspondant à l'électro-réduction et greffage des sels de diazonium est toujours présent, alors que l'on observe un film couvrant sur la lame.

Ceci montre que la croissance du film a lieu sur le film lui-même, qui est donc conducteur.

### EXEMPLE 6) : ELECTRO-GREFFAGE D'UN POLYMERE VINYLIQUE

### SUR UN FILM DE DIAZO CONDUCTEUR.

Une lame recouverte d'un film électro-greffé de l'exemple 1, et ayant une épaisseur de 3 nm, est replongée dans une solution de méthyl méthacrylate (MMA) à 2 mol/l dans l'acétonitrile contenant 5.10⁻² mol/l de perchlorate de tétraéthyl ammonium (TEAP). Elle est à nouveau utilisée comme cathode, et on la soumet à une série de 10 balayages entre +0,3 V(Ag⁺/Ag) et -2,7 V(Ag⁺/Ag), à une vitesse de balayage de -100 mV/s.

On observe la formation d'un film de polyméthylméthacrylate (PMMA) de 80 nm d'épaisseur.

La figure 8 annexée représente le spectre infrarouge permettant d'identifier la structure du polymère formé, et d'observer la disparition des groupements nitro. Le pic à 1740 cm⁻¹ est dû au groupements esters du PMMA (C=O).

La figure 10 est un spectre infra-rouge (Tr (%)) en fonction de la fréquence (F ) (cm⁻¹). Sur cette figure, le spectre du haut (BB) est celui d'un film de bromo benzyl greffé sur une surface d'or selon le procédé de la présente invention à partir de tétrafluoroborate de 4-bromobenzyle diazonium, et le spectre du bas (PMMA) correspond à l'échantillon précédent sur lequel est greffé un film de PMMA.

Comme il est décrit dans l'art antérieur, par exemple dans les demandes de brevet EP-A-038 244, et WO-A-00 29043, ou encore dans les références [2], [3] et [4] indiquées sur la liste de références en annexe, l'obtention d'un film de PMMA électro-initié procède par un mécanisme d'addition de Michael sur le MMA, où le nucléophile est la surface polarisée négativement. En particulier, ce mécanisme n'est possible que si la surface est conductrice de l'électricité.

L'obtention d'un film de PMMA sur un film de diazos électro-greffé est donc compatible avec le fait que le film de diazos de la présente invention est conducteur de l'électricité: en particulier, le potentiel chimique de ce film peut être piloté par un potentiostat, et sa nucléophilie ajustée. Ceci est décrit dans les références [2], [3] et [4] indiquées sur la liste annexée.

### EXEMPLE 7) : INTERPENETRATION ENTRE UN FILM ORGANIQUE CONDUCTEUR ELECTRO-GREFFE ET UN FILM DE POLYMERE VINYLIQUE ELECTRO-GREFFE.

Sur la même surface de platine nue que celle qui a été utilisée dans l'exemple 5, c'est à dire sur une surface de platine non préalablement recouverte d'un film organique conducteur, un protocole identique à celui de l'exemple 5 conduit à la production d'un film de PMMA d'environ 30 nm d'épaisseur, c'est-à-dire bien inférieure aux 80 nm obtenus sur une surface de platine recouverte d'un film de diazos.

Ce résultat, reproductible, notamment sur d'autres surfaces, est probablement dû au fait que : (i) le film de diazos est au moins gonflé par le solvant de synthèse dans lequel on réalise l'électro-initiation du vinylique ; (ii) le film est conducteur dans toute son épaisseur, comme le montre l'exemple 6 ci-dessus.

En conséquence, la croissance des chaînes de PMMA s'effectue depuis le coeur du film de diazos, sur une surface d'aire apparente plus élevée. Ceci occasionne donc un taux de greffage plus élevé, donc des épaisseurs plus importantes. Ce raisonnement est valable tant que les épaisseurs sont inférieures à la longueur des chaînes, c'est-à-dire inférieures à 100 nm environ dans le cas du PMMA électro-initié.

### EXEMPLE 8) : CONDUCTION ELECTRIQUE ET PROPRIETES OPTIQUES DES FILMS

Les exemples précédents ont permis d'illustrer la conductivité électrique en solution des films organiques obtenus à partir de sels de diazonium.

Cet exemple illustre la conductivité électrique à sec des films organiques de diazonium.

Dans cet exemple, les films étant de faible épaisseur, les mesures ont été réalisées par des méthodes optiques plutôt que par des méthodes directement diélectriques. En effet, les mesures diélectriques sont réalisées avec un contact mécanique entre le film et une surface métallique servant de sonde. Dans le cas de films minces, le film peut être percé au moment du contact entre la sonde et l'échantillon, ce qui a pour effet de mettre la sonde et la surface portant le film en court-circuit. Cet accident, difficilement décelable, a pour conséquence de conduire à trouver tout revêtement conducteur. Ce type de mesure n'est donc pas toujours probant.

Dans le cas présent, on mesure l'indice de réfraction (n) et le coefficient d'extinction (k) des films de la présente invention par spectroscopie ellipsométrique d'impédance électrochimique. Les mêmes mesures sont effectuées également sur des films de polymères vinyliques d'épaisseurs voisines, dont on sait qu'ils sont isolants.

Comme le montrent les résultats ci-dessous, il apparaît :
- que les films de diazonium donnent des coefficients d'extinction k de l'ordre de 0,4 à 0,5 ;
- que des coefficients k de cet ordre sont les mêmes que ceux des revêtements obtenus à partir de polymères conducteurs comme le polypyrrole (k = 0, 5)...etc
- que les coefficients k de revêtements isolants de même épaisseur que les revêtements de la présente invention sont inférieurs de plus de deux ordres de grandeur, k = 0,0 à 0,005.

En conséquence la mesure des coefficients d'extinction optique k pour différentes surfaces permet très simplement de ranger lesdites surfaces en fonction de leur caractère isolant ou conducteur de l'électricité, en s'affranchissant d'une mesure diélectrique directe qui soulèverait des problèmes de réalisation non directement liés à l'invention.

Les mesures d'extinction sont effectuées par ellipsométrie spectroscopique. Pour caractériser les échantillons (épaisseur e, indice n et extinction k), les inventeurs ont procédé par régression des mesures ellipsométriques à l'aide d'un logiciel de lissage complexe avec une loi non dispersive, puis avec un modèle d'oscillateurs de Lorentz. La cohérence des résultats a été vérifiée avec les mesures spectrophotométriques.

Les coefficients d'extinction optique k ont été mesurés pour deux films obtenus par électro-réduction du tétrafluoroborate de para-nitrophényldiazonium, que l'on compare à ceux de revêtements conducteurs (or, platine, polypyrrole) ainsi qu'à ceux de revêtements isolants (PMAN, PMMA).

Les mesures ont été effectuées sur huit échantillons différents, dont les caractéristiques sont résumées dans le Tableau 1 ci-dessous. Deux séries distinctes ont été analysées :
- deux films de PMAN électro-greffés sur or, d'épaisseur 9 et 28 nm. Ces films sont obtenus par électro-réduction d'une solution à 2,5 M de méthacrylonitrile dans l'acétonitrile anhydre sur électrode d'or, en présence de 5.10⁻² M de TEAP (Tétra-Ethyl Ammonium Perchlorate) comme électrolyte support. L'électro-réduction a lieu en conditions voltammétriques entre - 0,3 et - 2,6 V/(Ag⁺/Ag) à 100 mV/s, en compartiments non séparés, avec une contre-électrode de platine de grande surface. Les différentes épaisseurs sont obtenues en variant le nombre de balayages voltammétriques ;
- deux films obtenus par électro-réduction d'une solution à 10⁻³ M de tétrafluoroborate de para-nitrophényldiazonium (PNPD) dans l'acétonitrile anhydre sur électrode de platine, en présence de 5.10⁻² M de TEAP (Tétra-Ethyl Ammonium Perchlorate) comme électrolyte support. Les balayages de potentiels sont appliqués de + 0,3 V/(Ag⁺/Ag) à - 2,9 V/(Ag⁺/Ag), à - 200 mV/s. Deux films, d'épaisseurs respectives 3 (0101Pt6) et 30 nm (0101Pt14) sont obtenus par ce protocole.

Les mesures d'indice et d'extinction sur les échantillons organiques sont résumées dans le Tableau 1 ci-dessous. A titre de comparaison, les résultats des mesures effectuées sur les films isolants de PolyMéthAcryloNitrile (PMAN) d'épaisseur 9nm (MANAu15) et 28nm (MANAu24) obtenus par électro-greffage sont également présentés dans ce tableau

On mesure des coefficients d'extinction très bas pour les films vinyliques isolants (k < 0,02), alors que les films organiques obtenus par électro-réduction du tétrafluoroborate de para-nitrophényldiazonium donnent des extinctions au moins 10 fois plus élevées, caractéristiques de revêtements conducteurs.

A titre de comparaison, les films de polypyrrole d'épaisseur voisine de celles des échantillons mesurés (20 nm) ont un coefficient d'extinction k = 0,3 à 0,5, mesuré dans les mêmes conditions, pour un indice de 1,5. En effet, Arwin et al., dans la référence [5] de la liste de références annexée, mesurent sur un film de polypyrrole de 22 nm d'épaisseur sur or, un indice d'extinction k = 0,3, pour un indice de réfraction n = 1,45 ; Kim et al., dans la référence [6], mesurent une extinction k = 0,3 et un indice n = 1,6 à λ = 632,8 nm, pour un film de polypyrrole de 47 nm d'épaisseur; Kim et al., dans la référence [7], mesurent sur un film de polypyrrole de 54 nm à l'état oxydé un indice n = 1,45 pour une extinction k = 0,28, et sur un film de 47 nm à l'état réduit un indice n = 1,6 pour une extinction k = 0,21; et Guedon et al., dans la référence [8], mesurent sur un film de polypyrrole sur or et pour des épaisseurs du film comprises entre 7,5 et 20 nm, un indice n = 1,7 pour une extinction k = 0,3 à 633 nm.

**Tableau 1 : Caractéristiques optiques des échantillons.**

| **Echantillon** | **Caractère** | **e(profilo) nm** | **e(ellipso) nm** | **N** | **K** |
|---|---|---|---|---|---|
| **MANAu15** | isolant | 9 | 5-6 | 1,5 | 0,02 |
| **MANAu24** | isolant | 28 | 24 | 1,5 | 0 |
| **0101Pt6** | conducteur | 3 | - | 1,9 | 0,1 |
| **0101Pt14** | conducteur | 30 | 25 - 30 | 0,9 | 0,5 |

On constate ainsi que les films obtenus par électro-réduction de sels d'aryl diazonium ont donc bien les caractéristiques optiques de conducteurs, et absorbent de façon importante.

### EXEMPLE 9) : BICOUCHE DE FILMS ORGANIQUES CONDUCTEURS

Dans cet exemple, on illustre le fait qu'il est possible de réaliser des multicouches organiques à partir de sels de diazonium de natures différentes en utilisant le procédé de la présente invention.

Une lame recouverte d'un film électro-greffé de l'exemple n°1, et ayant une épaisseur de 3 nm, est replongée dans une solution de tétrafluoroborate de 4-bromophényl diazonium à 10-3 mol/l dans l'acétonitrile contenant 5.10⁻² mol/l de perchlorate de tétraéthyl ammonium (TEAP). Elle est à nouveau utilisée comme cathode, et on la soumet à une série de 10 balayages entre +0,3 V(Ag⁺/Ag) et -2,7 V(Ag⁺/Ag), à une vitesse de balayage de -100 mV/s.

On observe la formation d'un film organique conducteur.

La mesure d'épaisseur révèle un film de 15 nm environ. Le spectre XPS de ce film montre la présence de brome, alors que la signature des groupements nitro a disparu, ce qui est en accord avec la formation d'un film organique d'épaisseur supérieure à 10 nm sur la surface du premier film conducteur.

### EXEMPLE 10) : REVETEMENT OPTIQUEMENT ABSORBANT.

On illustre ici les propriétés d'absorption optique des films de l'invention.

A partir des mesures de l'exemple 8 ci-dessus, on peut extraire les valeurs des coefficients de réflexion (R), de transmission (T) et de perte (P) des films de diazo, à 560 nm. Ils sont résumés dans le tableau 2 ci-dessous.

Les mêmes mesures ont également été effectuées sur les films de polymères isolants obtenus par électro-greffage de vinyliques sur de l'or, et sont représentées dans le tableau 3 ci-dessous.

**Tableau 2 : coefficients de réflexion (R), de transmission (T) et de perte (P)-des films de diazo sur platine, à 560 nm.**

| | **A 560 nm** | | |
|---|---|---|---|
| **Echantillon** | **R (%)** | **T (%)** | **P (%)** |
| **0101Pt14** | 45,72 | 0,02 | 54,26 |
| **0101Pt6** | 57,32 | 0,02 | 42,66 |

**Tableau 3 : coefficients de réflexion (R), de transmission (T) et de perte (P) des films de polyméthacrylonitrile sur or, à 560 nm.**

| | **à 560 nm** | | |
|---|---|---|---|
| **Echantillon** | **R (%)** | **T (%)** | **P (%)** |
| **MANAu 15** | 81,32 | 0,02 | 18,66 |
| **MANAu 24** | 75,45 | 0,03 | 24,51 |
| **Au 2301** | 77,54 | 0,0207 | 22,44 |
| **Au 2401** | 84,19 | 0,04 | 15,77 |

La comparaison des deux tableaux montre que la couche de film organique obtenue à partir de sels de diazonium est environ deux fois moins réfléchissante à la fois que les couches organiques d'isolants, et que les surfaces de métal initiales. Dans le même temps, les transmissions optiques sont analogues, et seul le taux de pertes augmente quand on passe des échantillons du tableau 3 à ceux du tableau 2.

On met ainsi en évidence les propriétés d'absorption optique des revêtements de l'invention. En conséquence, par un ajustement adéquat de l'épaisseur, ces revêtements peuvent être utilisés pour réaliser un revêtement à propriétés furtives.

### REFERENCES

[1] Mac Diamid et coll., brevet US4640749 (1985) et les références qui figurent dans ce brevet.
[2] C. Bureau, G. Deniau, P. Viel, G. Lécayon and J. Delhalle, *Journal of Adhesion*, **58** (1998) 101.
[3] C. Bureau and G. Lécayon, *Journal of Chemical* Physics, **106** (1997) 8821.
[4] C. Bureau and J. Delhalle, *Journal of Surface Analysis,* **6** (1999) 159.
[5] Arwin et al., *Synthetic Metals* **6** 1983 : "Dielectric Function of Thin Polypyrrole and Prussian Blue Films by Spectroscopie Ellipsometry .
[6] Kim et al., *Journal* of *the Electrochemical Society,* **138(11),** 1991 : "Real Time Spectroscopic Ellipsometry : In Situ Characterization of Pyrrole Electropolymerization"
[7] Kim et al., *Bulletin of the Korean Chemical Society,* **17(8),** 1996 : "Polypyrrole Film Studied by Three-Parameter Ellipsometry".
[8] Guedon et al., *Analytical Chemistry,* **22,** 6003-6009, 2000 : "Characterization and Optimization of a Real-Time, Parallel, Label-Free, Polypyrrole-Based DNA Sensor by Surface Plasmon Resonance Imaging".

## Revendications

1. Procédé de greffage et de croissance d'un film organique conducteur sur une surface conductrice ou semi-conductrice de l'électricité par électroréduction d'au moins un sel de diazonium précurseur dudit film organique, comprenant une étape de greffage et de croissance du film par application d'au moins un protocole consistant en l'électroréduction dudit sel de diazonium sur ladite surface polarisée électriquement par application d'un potentiel variable allant de +0,3 V à -2,9 V par rapport à une électrode de référence Ag⁺/Ag, dans lequel le film organique est couvrant.

2. Procédé selon la revendication 1, dans lequel au moins un protocole est appliqué en mode potentiostatique.

3. Procédé selon la revendication 1, dans lequel au moins un protocole est appliqué en mode intensiostatique.

4. Procédé selon la revendication 1, dans lequel dans au moins un protocole, un courant de travail variable est imposé à ladite surface.

5. Procédé selon la revendication 1 dans lequel la croissance du film est réalisée par application successive de plusieurs protocoles, choisis indépendamment parmi des protocoles à potentiel de travail imposé fixe ou variable et des protocoles à courant de travail imposé fixe ou variable, chaque protocole étant appliqué sur ladite surface pendant une durée déterminée identique ou différente de celle des autres protocoles.

6. Procédé selon la revendication 5, dans lequel le nombre de protocoles appliqués sur ladite surface est compris entre 1 et 10000.

7. Procédé selon la revendication 5, dans lequel tous les protocoles appliqués sur ladite surface sont identiques.

8. Procédé selon la revendication 1 ou 5, dans lequel, dans au moins un des protocoles appliqués, le potentiel de ladite surface est imposé de manière à former un créneau triangulaire de potentiel.

9. Procédé selon la revendication 1 ou 5, dans lequel, dans au moins un des protocoles appliqués, un créneau triangulaire de courant est imposé à ladite surface.

10. Procédé selon la revendication 1 ou 5, dans lequel, dans au moins un des protocoles appliqués, le potentiel de ladite surface est imposé de manière à former un créneau carré de potentiel.

11. Procédé selon la revendication 1 ou 5, dans lequel, dans au moins un des protocoles appliqués, un créneau carré de courant est imposé à ladite surface.

12. Procédé selon la revendication 5, dans lequel le greffage et la croissance du film sont obtenus par une combinaison de protocoles à potentiel imposé fixe ou variable et de protocoles à courant imposé fixe ou variable.

13. Procédé selon la revendication 1, dans lequel le sel de diazonium est un sel de diazonium ou un mélange de sels de diazonium de formule générique R'-N₂⁺,X⁻, dans laquelle le groupement R' contient un ou plusieurs cycle(s) aromatique(s) et/ou un ou plusieurs groupement(s) insaturé(s) susceptibles de délivrer des structures conductrices, et X⁻ est un contre-ion.

14. Procédé selon la revendication 13 dans lequel les groupements R' comportent un groupement organique ou inorganique choisi parmi les groupements nitro, fluoro, bromo, chloro, iodo, thiocyanato, sulfate, sulfonate, sels de sulfonium, phosphate, phosphonate, sels de phosphonium, sels de diazonium, amine, ammonium, alcool, aldéhyde, cétone, acide carboxylique, ester, amide, nitrile, anhydride, halogénure d'acide, ainsi que parmi les groupements alkyls, alkényls, alkynyls, aryls, naphtyls, anthryls, pyryls ou poly-aromatique de degré supérieur, possédant eux-mêmes un de ces groupements.

15. Procédé selon la revendication 1, dans lequel le sel de diazonium est choisi parmi un sel de tétrafluoroborate, d'halogénure, de sulfate, de phosphate, de carboxylate, de perchlorate d'hexafluorophosphate ou un mélange de ces sels.

16. Procédé selon la revendication 1, dans lequel l'électro-réduction est réalisée dans un milieu dans lequel le sel de diazonium est à une concentration comprise entre 10⁻⁴ et 1 mol/l.

17. Procédé selon la revendication 1, dans lequel le sel de diazonium comportant un ou des hétérocycle(s) aromatique(s), l'électroréduction est réalisée dans un milieu de synthèse incluant des sels métalliques.

18. Procédé selon la revendication 1, dans lequel l'électro-réduction du sel de diazonium est réalisée dans un milieu comprenant un électrolyte support.

19. Procédé selon la revendication 1, dans lequel la surface est choisie parmi une surface d'un métal noble, une surface à oxyde réductible, une surface de graphite, une surface organique conductrice ou semi-conductrice, une surface d'un alliage, une surface d'un ou de polymère(s) conducteur(s) traditionnel(s) tel qu'une surface à base de pyrrole, d'aniline, de thiophène, d'EDOT, d'acétylène, de polyaromatiques, une surface d'un semi-conducteur, intrinsèque ou dopé, et de toute combinaison de ces composés.

20. Procédé de greffage et de croissance d'un film organique conducteur sur une surface conductrice ou semi-conductrice de l'électricité par électroréduction d'un sel de diazonium précurseur dudit film organique, comprenant une première étape de greffage et de croissance du film par application d'au moins un protocole consistant en l'électroréduction d'un premier sel de diazonium sur ladite surface polarisée électriquement par application d'un potentiel variable allant de +0,3 V à -2,9 V par rapport à une électrode de référence Ag⁺/Ag ; et une deuxième étape de greffage et de croissance du film par électroréduction d'un deuxième sel de diazonium différent dudit premier sel de diazonium.

21. Procédé selon la revendication 1, 5 ou 20, comprenant en outre une étape de dépôt d'un film isolant sur ledit film organique conducteur.

22. Procédé selon la revendication 1, 5 ou 20, comprenant en outre une étape de dépôt d'un film d'un polymère vinylique par électropolymérisation du monomère vinylique correspondant sur le film organique conducteur.

## Claims

1. Process for grafting and growing a conductive organic film on(to) an electrically conductive or semiconductive surface by electro-reduction of at least one diazonium salt that is a precursor of the said organic film, comprising a step of grafting and growing the film by application of at least one protocol consisting of the electro-reduction of the said diazonium salt on(to) the said surface electrically polarized by applying a variable potential from +0.3 V to -2.9 V relative to an Ag⁺/Ag reference electrode in which the organic film is covering.

2. Process according to claim 1, in which at least one protocol is applied in potentiostatic mode.

3. Process according to claim 1, in which at least one protocol is applied in intensiostatic mode.

4. Process according to claim 1, in which, in at least one protocol, a variable working current is applied to the said surface.

5. Process according to claim 1, in which the film is grown by successive application of several protocols, chosen independently from protocols with fixed or variable applied working potential and protocols with fixed or variable applied working current, each protocol being applied to the said surface for a given duration that is identical to or different from that of the other protocols.

6. Process according to claim 5, in which the number of protocols applied to the said surface is between 1 and 10,000.

7. Process according to claim 5, in which all the protocols applied to the said surface are identical.

8. Process according to claim 5, in which, in at least one of the applied protocols, the potential of the said surface is applied as to form a triangular potential pulse.

9. Process according to claim 1 or 5, in which, in at least one of the applied protocols, a triangular current pulse is applied to the said surface.

10. Process according to claim 1 or 5, in which, in at least one of the applied protocols, the potential of the said surface is applied so as to form a square potential pulse.

11. Process according to claim 1 or 5, in which, in at least one of the applied protocols, a square current pulse is applied to the said surface.

12. Process according to claim 5, in which the grafting and growth of the film are obtained by a combination of protocols with fixed or variable applied potential and protocols with fixed or variable applied current.

13. Process according to claim 1, in which the diazonium salt is a diazonium salt or a mixture of diazonium salts of generic formula R'-N_{2⁺},X⁻, in which the group R' contains one or more aromatic ring(s) and/or one or more unsaturated group(s) capable of delivering conductive structures, and X⁻ is a counterion.

14. Process according to claim 13, in which the groups R' comprise an organic or mineral group chosen from the following groups: nitro, fluoro, bromo, chloro, iodo, thiocyanato, sulphate, sulphonate, sulphonium salts, phosphate, phosphonate, phosphonium salts, diazonium salts, amine, ammonium, alcohol, aldehyde, ketone, carboxylic acid, ester, amide, nitrile, anhydride and acid halide, and also from alkyl, alkenyl, alkynyl, aryl, naphthyl, anthryl, pyrryl or polyaromatic groups of higher degree, themselves containing one of these groups.

15. Process according to claim 1, in which the diazonium salt is chosen from a tetrafluoroborate, halide, sulphate, phosphate, carboxylate, perchlorate or hexafluorophosphate salt or a mixture of these salts.

16. Process according to claim 1, in which the electro-reduction is performed in a medium in which the diazonium salt is at a concentration of between 10⁻⁴ and 1 mol/l.

17. Process according to claim 1, in which the diazonium salt comprises one or more aromatic heterocycle(s), the electro-reduction is performed in a synthetic medium including metal salts.

18. Process according to claim 1, in which the electro-reduction of the diazonium salt is performed in a medium comprising a support electrolyte.

19. Process according to claim 1, in which the surface is chosen from a surface of a noble metal, a surface containing reducible oxide, a graphite surface, a conductive or semiconductive organic surface, a surface of an alloy, a surface of one or more conventional conductive polymer(s), such as a surface based on pyrrole, on aniline, on thiophene, on EDOT, on acetylene or on polyaromatics, a surface of an intrinsic or doped semiconductor, and any combination of these compounds.

20. Process for grafting and growing a conductive organic film on(to) an electrically conductive or semiconductive surface by electro-reduction of a diazonium salt that is a precursor of the said organic film, comprising a first step of grafting and growing the film by applying at least one protocol consisting of the electro-reduction of a first diazonium salt on the said surface electrically polarized by application of a variable potential between +0.3 V and -2.9 V relative to an Ag⁺/Ag reference electrode and a second step of grafting and growing the film by electro-reduction of a second diazonium salt different from said first diazonium salt.

21. Process according to claim 1, 5 or 20, also comprising a step of depositing an insulating film on the said conductive organic film.

22. Process according to claim 1, 5 or 20, also comprising a step of depositing a film of a vinyl polymer by electropolymerization of the corresponding vinyl monomer on the conductive organic film.

## Patentansprüche

1. Verfahren zum Aufpfropfen und Aufwachsenlassen eines organischen Leiterfilms auf eine elektrisch leitende oder halbleitende Oberfläche durch Elektroreduktion mindestens eines Diazoniumsalz-Vorläufers des genannten organischen Films, wobei das Verfahren umfasst eine Stufe zum Aufpfropfen und Aufwachsenlassen des Films durch Anwendung mindestens eines Protokolls, das besteht aus einer Elektroreduktion des genannten Diazoniumsalzes, auf die genannte elektrisch polarisierte Oberfläche durch Anlegen eines variablen Potentials, das von +0,3 V bis -2,9 V gehen kann, bezogen auf eine Ag⁺/Ag-Referenzelektrode, wobei der organische Film eine Abdeckung bildet.

2. Verfahren nach Anspruch 1, bei dem mindestens ein Protokoll im potentiostatischen Modus angewendet wird.

3. Verfahren nach Anspruch 1, bei dem mindestens ein Protokoll im intensiostatischen Modus angewendet wird.

4. Verfahren nach Anspruch 1, bei dem in mindestens einem Protokoll ein variabler Betriebsstrom an die genannte Oberfläche angelegt wird.

5. Verfahren nach Anspruch 1, bei dem das Aufwachsenlassen des Films durchgeführt wird durch aufeinanderfolgende Anwendung mehrerer Protokolle, die unabhängig voneinander ausgewählt werden aus Protokollen mit festem oder variablem angelegtem Betriebspotential und Protokollen mit festem oder variablem angelegtem Betriebsstrom, wobei jedes Protokoll auf die genannte Oberfläche angewendet wird für eine festgelegte Zeitspanne, die identisch oder verschieden ist von derjenigen der anderen Protokolle.

6. Verfahren nach Anspruch 5, bei dem die Anzahl der auf die Oberfläche angewendeten Protokolle zwischen 1 und 10 000 liegt.

7. Verfahren nach Anspruch 5, bei dem alle auf die genannte Oberfläche angewendeten Protokolle identisch sind.

8. Verfahren nach Anspruch 1 oder 5, bei dem in mindestens einem der angewendeten Protokolle, das an die genannte Oberfläche angelegte Potential so ist, dass ein dreieckiger Potentialimpuls an die genannte Oberfläche angelegt wird.

9. Verfahren nach Anspruch 1 oder 5, bei dem in mindestens einem der angewendeten Protokolle ein dreieckiger Stromimpuls an die genannte Oberfläche angelegt wird.

10. Verfahren nach Anspruch 1 oder 5, bei dem in mindestens einem der angewendeten Protokolle, das an die genannte Oberfläche angelegte Potential so ist, dass ein quadratischer Potentialimpuls entsteht.

11. Verfahren nach Anspruch 1 oder 5, bei dem in mindestens einem der angewendeten Protokolle ein quadratischer Stromimpuls an die genannte Oberfläche angelegt wird.

12. Verfahren nach Anspruch 5, bei dem das Aufpfropfen und Aufwachsenlassen des Films erzielt werden durch eine Kombination von Protokollen mit einem angelegten festen oder variablen Potential und Protokollen mit einem angelegten festen oder variablen Strom.

13. Verfahren nach Anspruch 1, bei dem das Diazoniumsalz ein Diazoniumsalz oder eine Mischung von Diazoniumsalzen der allgemeinen Formel ist
R'-N₂⁺, X⁻,
in der die Gruppe R' ein oder mehrere aromatische Cyclen und/oder ein oder mehrere ungesättigte Gruppen enthält, die elektrisch leitende Strukturen ergeben können, und X⁻ ein Gegenion darstellt.

14. Vorfahren nach Anspruch 13, bei dem die Gruppen R' eine organische oder anorganische Gruppe tragen, die ausgewählt wird unter den Nitro-, Fluor-, Brom-, Chlor-, lod-, Thiocyanat-, Sulfat-, Sulfonat-, Sulfoniumsalz-, Phosphat-, Phoshonat-, Phosphoniumsalz-, Diazoniumsalz-, Amin-, Ammonium-, Alkohol-, Aldehyd-, Keton-, Carbonsäure-, Ester-, Amid-, Nitril-, Anhydrid-, Säurehalogenid-Grupen sowie unter den Alkyl-, Alkenyl-, Alkinyl-, Aryl-, Naphtyl-, Anthryl-, Pyryl- oder polyaromatischen Gruppen höheren Grades, die ihrerseits eine dieser Gruppen aufweisen.

15. Verfahren nach Anspruch 1, bei dem das Diazoniumsalz ausgewählt wird unter den Tetrafluoroborat-, Halogenid-, Sulfat-, Phosphat-, Carboxylat-, Perchlorat-, Hexafluorphosphat-Salzen oder einer Mischung dieser Salze.

16. Verfahren nach Anspruch 1, bei dem die Elektroreduktion in einem Medium durchgeführt wird, in dem das Diazoniumsalz in einer Konzentration zwischen 10⁻⁴ und 1 mol/l vorliegt.

17. Verfahren nach Anspruch 1, bei dem das Diazoniumsalz einen oder mehrere aromatische Heterocyclen umfasst und die Elektroreduktion in einem Synthesemedium durchgeführt wird, das Metallsalze enthält.

18. Verfahren nach Anspruch 1, bei dem die Elektroreduktion des Diazoniumsalzes in einem Medium durchgeführt wird, das einen Elektrolytträger umfasst.

19. Verfahren nach Anspruch 1, bei dem die Oberfläche ausgewählt wird aus der Gruppe, die besteht aus einer Edelmetall-Oberfläche, einer reduzierbaren Oxid-Oberfläche, einer Graphit-Oberfläche, einer elektrisch leitenden oder halbleitenden organischen Oberfläche, einer Legierungs-Oberfläche, einer Oberfläche eines oder mehrerer traditioneller elektrisch leitender Polymeren, wie z.B. einer Oberfläche auf Basis von Pyrrol, Anilin, Thiophen, EDOT, Acetylen, einer Oberfläche von Polyaromaten, einer Oberfläche eines Halbleiters, der eigenleitend oder dotiert ist, und jeder beliebigen Kombination dieser Verbindungen.

20. Verfahren zum Aufpfropfen und Aufwachsenlassen eines organischen Leiterfilms auf eine elektrisch leitende oder halbleitende Oberfläche durch Elektroreduktion eines Diazoniumsalz-Vorläufers des genannten organischen Films, wobei das Verfahren umfasst
eine erste Stufe zum Aufpfropfen und Aufwachsenlassen des Films durch Anwendung mindestens eines Protokolls, das darin besteht, dass man ein erstes Diazoniumsalz auf der genannten elektrisch polarisierten Oberfläche einer Elektroreduktion unterwirft durch Anlegen eines variablen Potentials, das von +0,3 V bis -2,9 V gehen kann, bezogen auf eine Ag⁺/Ag-Referenzelektrode, und
eine zweite Stufe zum Aufpfropfen und Aufwachsenlassen des Films durch Elektroreduktion eines zweiten Diazoniumsalzes, das von dem genannten ersten Diazoniumsalz verschieden ist.

21. Verfahren nach Anspruch 1, 5 oder 20, das außerdem eine Stufe der Abscheidung eines isolierenden Films auf dem genannten organischen Leiterfilm umfasst.

22. Verfahren nach Anspruch 1, 5 oder 20, das außerdem eine Stufe der Abscheidung eines Films aus einem Vinylpolymer durch Elektropolymerisation des entsprechenden Vinylmonomers auf dem organischen Leitferfilm umfasst.
